# EUROPÄISCHE PATENTSCHRIFT

(11) **EP 1 210 779 B1**
(45) Veröffentlichungstag und Bekanntmachung des Hinweises auf die Patenterteilung: **31.01.2007**
(21) Anmeldenummer: 00938556.8
(22) Anmeldetag: 16.05.2000
(51) Int. Cl.: H04B 7/26, H04Q 7/38

(54) **VERFAHREN ZUM ERMITTELN DER MIT EINER MOBILSTATION ZUR KOMMUNIKATION GEEIGNETEN BASISSTATION IN EINEM MOBILFUNKSYSTEM**
METHOD FOR DETERMINING BASE STATIONS ABLE TO COMMUNICATE WITH A MOBILE STATION IN A MOBILE RADIOTELEPHONE SYSTEM
PROCEDE POUR DETERMINER LES STATIONS DE BASE APTES A COMMUNIQUER AVEC UNE STATION MOBILE DANS UN SYSTEME RADIOTELEPHONIQUE MOBILE

(30) Priorität: 06.07.1999 DE 19931049
(43) Veröffentlichungstag der Anmeldung: 05.06.2002
(73) Patentinhaber: SIEMENS AKTIENGESELLSCHAFT, 80333 München (DE)
(72) Erfinder: RAAF, Bernhard, D-81475 München (DE)
(86) Internationale Anmeldenummer: PCT/DE2000/001547
(87) Internationale Veröffentlichungsnummer: WO 2001/003333

(56) Entgegenhaltungen:
- EP-A- 0 767 557
- ETSI TC-SMG: "EUROPEAN DIGITAL CELLULAR TELECOMMUNICATIONS SYSTEM (PHASE 2);RADIO SUBSYSTEM LINK CONTROL (GSM 05.08, V5.1.0)" EUROPEAN TELECOMMUNICATION STANDARD,XX,XX, 1. August 1996 (1996-08-01), XP002149864

## Beschreibung

Die vorliegende Erfindung betrifft ein Verfahren zum Ermitteln der mit einer Mobilstation zur Kommunikation geeigneten Basisstationen in einem Mobilfunksystem sowie ein entsprechendes Mobilfunksystem.

In Mobilstationen eines Mobilfunksystems müssen zur Vorbereitung eines sogenannten Handover-Vorgangs, d.h. des Weiterreichens eines Gesprächs von einer Basisstation zu einer benachbarten Basisstation, diejenigen Nachbar-Basisstationen bekannt sein, deren Signale augenblicklich empfangen werden können und die somit zur Kommunikation mit der Mobilstation geeignet sind.

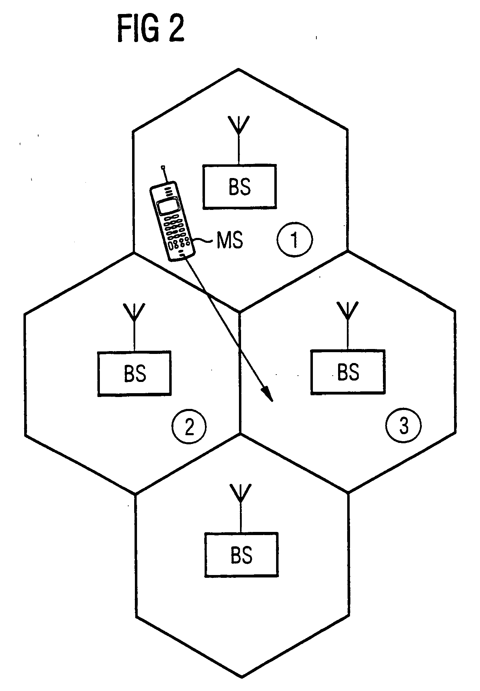

In Fig. 2 sind beispielhaft verschiedene Funkzellen eines zellular aufgebauten Mobilfunknetzes dargestellt. Jeder Funkzelle ist gemäß Fig. 2 eine Basisstation BS zugeordnet, welche für die sich augenblicklich in der entsprechenden Funkzelle befindlichen Mobilstationen MS zuständig ist. Bewegt sich beispielsweise die in Fig. 2 gezeigte Mobilstation 1 in Pfeilrichtung von der Funkzelle (1) zu der Funkzelle (3), muß ein augenblicklich mit der Mobilstation MS geführtes Gespräch von der für die Funkzelle (1) zuständigen Basisstation BS zunächst an die für die Funkzelle (2) zuständige Basisstation und bei Verlassen der Funkzelle (2) an die für die Funkzelle (3) zuständige Basisstation weitergereicht werden. Der zuvor beschriebene Handover-Vorgang setzt jedoch voraus, daß diejenigen Basisstationen BS, an die ein Gespräch weitergeleitet werden soll, auch tatsächlich zur Kommunikation mit der Mobilstation MS geeignet sind.

Zu diesem Zweck werden in Mobilstationen, beispielsweise gemäß dem GSM-Mobilfunkstandard (Global System For Mobile Communications), charakteristische Daten der Nachbar-Basisstationen empfangen und ausgewertet, wobei hierzu insbesondere die in einem als Synchronisationsburst ('Synchronisation Burst') bezeichneten Synchronisationsdatenpaket gesendeten Daten ausgewertet werden. Der Synchronisationsburst enthält zur Zeitsynchronisation eine besonders lange Trainingssequenz. Auch eine von der Mobilstation einmal gefundene Nachbar-Basisstation muß (in Abständen von ca. 10 bis 30 Sekunden) regelmäßig bestätigt werden, wozu ebenfalls die im Synchronisationsburst übertragenen Daten decodiert und ausgewertet werden. Eine derartige Bestätigung der empfangbaren Nachbar-Basisstationen ist auch erforderlich, wenn die Mobilstation lediglich empfangsbereit ist (sogenannter 'Idle Mode'), da auch bei Nichtvorliegen eines Gesprächs bei Fortbewegung der Mobilstation gegebenenfalls die augenblicklich zuständige Basisstation gewechselt werden muß (sogenannte 'Reselection').

Aus dem von der Mobilstation empfangenen und decodierten Synchronisationsburst jeder Basisstation können vier unterschiedliche Systeminformationen der jeweiligen Basisstation abgeleitet werden. Informationen über das Timing bzw. das zeitliche Sendeverhalten (und Empfangsverhalten) der Basisstation können aus dem Empfangszeitpunkt des Synchronisationsbursts abgeleitet werden. Darüber hinaus enthält der Synchronisationsburst eine als 'Network Colour Code (NCC)' bezeichnete Netzkennung und eine als 'Base Station Colour Code (BCC)' bezeichnete Basisstationkennung. Schließlich können aus dem Synchronisationsburst auch Informationen über die augenblickliche Rahmennummer ('Frame Number') des gesendeten Synchronisationsbursts abgeleitet werden.

Die Mobilstation stellt durch die oben beschriebene sogenannte BSIC-Decodierung ('Base Station Identity Code') fest, ob die augenblicklich betrachtete Basisstation noch empfangbar oder deren Sendesignal bereits zu stark gestört ist und ermittelt somit die sechs stärksten empfangbaren Nachbar-Basisstationen.

Die zuvor beschriebenen Anforderungen werden auch an GSM-Dual Mode-Mobilstationen, z.B. UMTS-GSM-Dual Mode-Mobilstationen, gestellt.

Das Problem bei der oben beschriebenen Vorgehensweise besteht jedoch darin, daß von jeder Basisstation ein Synchronisationsburst verhältnismäßig selten gesendet wird, wodurch die für die Nachbarkanalbestätigung benötigte Zeitspanne relativ lang ist und neue Nachbar-Basisstationen gegebenenfalls nicht sofort gefunden und bestätigt werden können.

Aus der EP 0 767 557 A1 ist ein Verfahren zur Messung des Timings bei der Übertragung von Signalen zwischen einer Basisstation und einer Mobilstation eines GSM-basierten Kommunikationssystems bekannt, das gegenüber bisherigen Messmethoden eine bessere Messgenauigkeit und Messauflösung aufweist. Um dieses zu erreichen, werden für die Messung mindestens zwei empfangene Bursts benutzt. Zur Verbesserung der Messgenauigkeit werden dabei die Trainingssequenzen von den empfangenen Bursts, insbesondere Synchronisationsbursts ausgewertet. Es ist aber auch möglich, anstelle der Synchronisationsbursts Normalbursts auszuwerten. Da der Normalburst gegenüber dem Synchronisationsburst eine kürzere Trainingssequenz aufweist und zudem viel häufiger in dem GSM-basierten Kommunikationssystem übertragen wird, kann deshalb die Messung schneller durchgeführt werden.

Der vorliegenden Erfindung liegt daher die Aufgabe zugrunde, ein verbessertes Verfahren zum Ermitteln der mit einer Mobilstation zur Kommunikation geeigneten Basisstationen in einem Mobilfunksystem sowie ein entsprechendes Mobilfunksystem vorzuschlagen, womit ein schnelleres Auffinden und Bestätigen von empfangbaren Nachbar-Basisstationen möglich ist.

Diese Aufgabe wird durch ein Verfahren mit den Merkmalen des Anspruches 1 bzw. ein Mobilfunksystem mit den Merkmalen des Anspruches 10 gelöst. Die Unteransprüche definieren jeweils bevorzugte und vorteilhafte Ausführungsformen der vorliegenden Erfindung.

Im Rahmen der vorliegenden Erfindung wird vorgeschlagen, statt des Synchronisationsbursts den sogenannten Normalburst auszuwerten. Der Normalburst wird in der Regel für die Übertragung der eigentlichen Kommunikationsinformationen verwendet und wird zu diesem Zweck deutlich häufiger als ein Synchronisationsburst gesendet (ca. vier- bis achtmal so häufig), so daß eine Mobilstation entsprechend häufiger Gelegenheiten hat, eine empfangbare Nachbar-Basisstation aufzufinden oder zu bestätigen. In GSM-Mobilstationen muß während eines Gesprächs oder einer Verbindung weniger lange gewartet werden, bis der für Zwischenfrequenzmessungen verwendete Rahmen (der sogenannte 'Idle Frame') an einer passenden Position auftaucht. Der zeitliche Ablauf ('Scheduling') wird somit vereinfacht, und empfangbare Nachbar-Basisstationen können schneller gefunden und bestätigt werden.

Zur Ermittlung der empfangbaren Nachbar-Basisstationen wird insbesondere die in den empfangenen Normalbursts enthaltene Trainingssequenz ausgewertet. Das Timing der einzelnen Basisstationen kann einfach aus dem Empfangszeitpunkt des entsprechenden Normalbursts abgeleitet werden. Die zuvor beschriebene Basisstationkennung (BCC) kann durch Auswerten der während des ersten Zeitschlitzes (Zeitschlitz #0) eines Trägers übertragenen Trainingssequenz des entsprechenden Normalbursts abgeleitet werden, da durch die BCC-Information der Trainingssequenzcode für Normalbursts in diesem Zeitschlitz festgelegt ist, so daß durch Korrelation der während dieses Zeitschlitzes empfangenen Trainingssequenz des entsprechenden Normalbursts die BCC-Information abgeleitet bzw. bestätigt werden kann. Die Rahmennummer wird kontinuierlich hochgezählt und muß daher nicht wiederholt bestimmt werden.

Aus der Trainingssequenz eines Normalbursts kann lediglich die Netzkennung bzw. die NCC-Information nicht abgeleitet werden. Innerhalb eines Mobilfunknetzes wird allerdings in der Regel ohnehin nur ein einziger NCC verwendet, da der NCC nur zur Unterscheidung von Mobilfunknetzen unterschiedlicher Betreiber, deren Sendefrequenz im selben Frequenzbereich liegen, dient. Dieser Fall wird somit nur an Staatsgrenzen auftreten, so daß dieser Mangel in der Regel nicht problematisch ist. Wird in einzelnen Fällen trotzdem die NCC-Information benötigt, kann kurz vor einem Handover bzw. auch während desselben wie üblich ein Synchronisationsburst bzw. dessen BSIC-Information decodiert und ausgewertet werden. Darüber hinaus sollten Netzbetreiber ohnehin sicherstellen, daß benachbarte Basisstationen, welche auf derselben Frequenz senden, unterschiedliche Trainingssequenzcodes verwenden, so daß dennoch eine Unterscheidung zwischen diesen unterschiedlichen Mobilfunknetzen über die jeweils verwendeten Trainingssequenzcodes möglich ist.

Die vorliegende Erfindung wird nachfolgend unter Bezugnahme auf die Zeichnung anhand bevorzugter Ausführungsbeispiele näher erläutert.

Fig. 1 zeigt eine Darstellung der für eine Übertragung in einem GSM-Mobilfunksystem verwendeten Rahmenstruktur zur Erläuterung des der vorliegenden Erfindung zugrundeliegenden Prinzips, und

Fig. 2 zeigt eine Darstellung zur Erläuterung eines Handover-Vorgangs in einem Mobilfunksystem.

In Mobilfunksystemen werden die zu übertragenden Informationen in Paketen mit fest vorgegebener Struktur übertragen. Diese Datenpakete werden als Bursts bezeichnet.

Beim GSM-Mobilfunkstandard wird zwischen fünf verschiedenen Bursttypen unterschieden, die jeweils eine Länge von 156,25 Bit aufweisen. Bei einer Übertragungsrate von 271 kbit/s entspricht dies einer zeitlichen Länge von 0,577 ms.

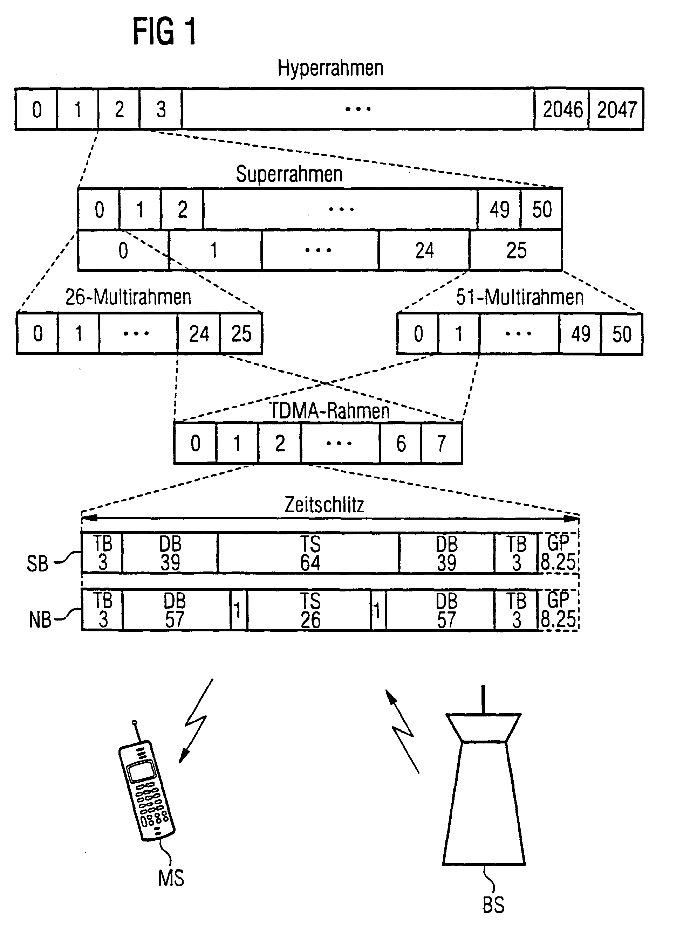

Auf den gemeinsamen Signalisierungskanälen und in einer laufenden Verbindung, d.h. während eines bestehenden Gesprächs, wird der sogenannte Normalburst (Normal Burst) gesendet. Wie in Fig. 1 gezeigt ist, umfaßt ein Normalburst NB zwei Datenbitfelder DB ä 57 Bits, auf welche die logischen Kanäle, d.h. die Verkehrs- und Steuerkanäle, jeweils einschließlich deren Codierung abgebildet werden. Des weiteren ist eine Trainingssequenz TS von 26 Bit vorgesehen, welche zusammen mit den vorderen und hinteren drei Tail Bits TB einerseits zu einer bitgenauen Synchronisation der Bursts und andererseits zur Schätzung der Kanalimpulsantwort im Empfänger dient, was wiederum zur Einstellung der Parameter des Empfänger-Equalizers zur Kanalentzerrung erforderlich ist. Dabei werden acht unterschiedliche Trainingssequenzen TS verwendet, welche zur Unterscheidung von Signalen unterschiedlicher Funkzellen bzw. Basisstationen beitragen können. Unmittelbar vor und nach der Trainingssequenz TS ist ein Flag-Bit vorgesehen, welches anzeigt, ob die vorhergehenden 57 Datenbits DB Verkehrs- oder Signalisierungsbits sind. Dem eigentlichen Normalburst NB folgt eine sogenannte 'Guard Period' von 8,25 Bit, welche Ungenauigkeiten beim Burst-Sendezeitpunkt vermindert und ein leichteres Einhalten der vorgesehenen Zeitmaske ermöglicht.

In Fig. 1 ist zudem ein Synchronisationsburst SB dargestellt, welcher eine besonders lange Trainingssequenz von 64 Bit zur Zeitsynchronisation aufweist. Außerdem werden die augenblicklich gültige Nummer des TDMA-Rahmens, in dem der Burst enthalten ist, sowie die bereits erwähnte BCC- und NCC-Information übertragen, welche zusammen die Basisstation-Identifikation (Base Station Identity Code, BISC) bilden.

Darüber hinaus werden sogenannten 'Frequency Correction Bursts' zur Frequenzkorrektur und 'Access Bursts', welche als erstes Signal einer Mobilstation gesendet werden, verwendet. Zudem sind sogenannte 'Dummy Bursts' vorgesehen, die unter bestimmten Voraussetzungen, die nachfolgend zum Teil noch näher erläutert werden, verwendet werden. Diese Bursttypen sind jedoch in Fig. 1 der Einfachheit halber nicht dargestellt, da sie für das Verständnis der vorliegenden Erfindung nicht von Bedeutung sind.

Gemäß dem GSM-Mobilfunkstandard ist eine Vielzahl von unterschiedlichen logischen Kanälen vorgesehen, welche auf die einzelnen Bursts gemultiplext werden. Die logischen Kanäle können grundsätzlich in Verkehrskanäle (Traffic Channel, TCH) und Steuer- oder Signalisierungskanäle (Control Channel, CCH) unterteilt werden.

Die Signalisierungskanäle können zudem in BCCH-Kanäle (Broadcast Control Channel), CCCH-Kanäle (Common Control Channel) und DCCH-Kanäle (Dedicated Control Channel) unterteilt werden. BCCH-Kanäle werden unidirektional von einer Basisstation zu einer Mobilstation übertragen und vermitteln der Mobilstation verschiedene für eine Kommunikation mit der betreffenden Basisstation erforderliche Informationen. BCCH-Kanäle umfassen zudem FCCH-Kanäle (Frequency Control Channel) zur Frequenzkorrektur mit Hilfe des 'Frequency Correction Bursts' und SCH-Kanäle (Synchronisation Channel) zur Synchronisation mit Hilfe des in Fig. 1 gezeigten Synchronisationsbursts SB. Jeder BCCH-Kanal ist in einen nachfolgend noch näher erläuterten Multirahmen bestehend aus 51 TDAM-Rahmen organisiert und wird in dem ersten Zeitschlitz, d.h. in dem Zeitschlitz #0, eines Trägers übertragen.

Der CCCH-Kanal wird zum eigentlichen Verbindungsaufbau verwendet. Der DCCH-Kanal erfüllt hingegen ähnliche Signalisierungsaufgaben wie der D-Signalisierungskanal in der ISDN-Technik ('Integrated Services Digital Network') und zudem einige mobilfunkspezifische Aufgaben, wie beispielsweise die Übertragung bestimmter Meßwerte. Der DCCH-Kanal ist unterteilt in den SDCCH-Kanal ('Stand-Alone DCCH') und ACCH ('Associated Control Channel'). An dieser Stelle soll lediglich kurz auf den SDCCH-Kanal eingegangen werden, der immer dann vorhanden ist, wenn nicht zusätzlich ein Verkehrskanal existiert. Seine Aufgaben sind u.a. die Information der Mobilstation über den zu verwendenden Kanal und die Aktualisierung des Aufenthaltsbereichs sowie das Weiterleiten von Gesprächen.

Wie bereits kurz erläutert worden ist, erfolgt die Datenübertragung der verschiedenen logischen Kanäle über die entsprechenden Bursts, denen alle 4,615 ms ein Zeitschlitz zur Verfügung steht.

Wie in Fig. 1 gezeigt ist, werden zur Sprach- und Datenübertragung 26 TDMA-Rahmen mit jeweils einer Länge von 4,615 ms zu einem sogenannten 26-Multirahmen zusammengefaßt. Der letzte TDMA-Rahmen ist leer (sogenannter 'Idle Frame'). Darüber hinaus wird eine zweite Art von Multirahmen verwendet. Der sogenannte 51-Multirahmen dient ausschließlich zu Signalisierungszwecken und ist daher mit den CCH-Kanälen belegt. 51 26-Multirahmen und 26 51-Multirahmen sind zu einem 6,12 s langen Superrahmen zusammengefaßt, wobei 2048 Superrahmen wiederum einen sogenannten Hyperrahmen ergeben. In einer laufenden Verbindung kann von Rahmen zu Rahmen zwischen einem Verkehrskanalrahmen (26-Multirahmen) und einem Signalisierungskanalrahmen (51-Multirahmen) gewechselt werden.

Von einer Mobilstation MS eines Mobilfunksystems werden erfindungsgemäß die von den Basisstationen BS des Mobilfunksystems übertragenen Normalbursts NB ausgewertet, um davon abhängig eine Entscheidung über die Eignung dieses Basisstationen für einen Verbindungsaufbau mit der Mobilstation MS treffen zu können. Dies ist insbesondere für die Vorbereitung eines Handover (vgl. Fig. 2) erforderlich, da die Mobilstation MS wissen muß, welche Nachbar-Basisstationen augenblicklich empfangen werden können.

Die Mobilstation MS analysiert insbesondere die in dem jeweils empfangenen Normalburst NB enthaltenen Trainingssequenz TS. Wie nachfolgend noch näher erläutert wird, reicht diese Trainingssequenz TS für die Identifizierung bzw. Bestätigung der entsprechenden Nachbar-Basisstation BS aus, da ähnlich zu der üblichen Decodierung der BSIC-Information eines Synchronisationsbursts SB auch aus dem Normalburst NB (fast) alle notwendigen Systeminformationen abgeleitet werden können. Allein die NCC-Information kann von der Mobilstation MS nicht aus einem Normalburst NB abgeleitet und bestätigt werden, wobei jedoch - wie bereits erwähnt worden ist - in der Regel auf diese Systeminformation verzichtet werden kann.

Über den Empfangszeitpunkt des Normalbursts kann das Timing, d.h. das zeitliche Sendeverhalten der entsprechenden Basisstation BS, abgeleitet und bestätigt werden. Der aus der Trainingssequenz TS des Normalbursts NB ableitbare Timingbereich ist zwar etwas kleiner als bei der Auswertung eines Synchronisationsbursts SB, das Timing einer Nachbar-Basisstation BS kann sich jedoch beispielsweise innerhalb von 10 s ohnehin nicht besonders weit verschieben.

Durch den BCC ('Base Station Colour Code') der sendenden Basisstation BS ist der für den im Zeitschlitz #0 gesendeten Normalburst NB verwendete Trainingssequenzcode festgelegt, d.h. aus dem Trainingssequenzcode des im Zeitschlitz #0 übertragenen Normalbursts kann unmittelbar auf die BCC-Information der Sende-Basisstation BS geschlossen werden. Wie bereits kurz erwähnt worden ist, sind beim GSM-Standard acht verschiedene Trainingssequenzen vorgesehen. Alle diese mögliche Trainingssequenzen weisen gute Kreuzkorrelationseigenschaften auf, so daß durch Korrelation der erwarteten Trainingssequenz mit dem Empfangssignal die Basisstation BS identifiziert und die BCC-Information bestätigt werden kann.

Um eine gute Performance des Mobilfunknetzes zu erreichen, muß jedoch sichergestellt sein, daß benachbarte Basisstationen BS, welche auf derselben Frequenz senden, unterschiedliche Trainingssequenzen verwenden. Ebenso sollte sichergestellt sein, daß grundsätzlich alle Bursts (mit Ausnahme der 'Frequency Correction Bursts' und 'Synchronisation Bursts') auf dem ersten Zeitschlitz eines Trägers, d.h. dem Zeitschlitz #0, Normalbursts NB sind. Nach dem derzeitigen GSM-Standard soll jedoch im Rahmen #50 ein Dummy Burst gesendet werden. Ebenso soll im Falle des sogenannten 'Combined Mode' auf den für einen SDCCH-Kanal verwendeten Zeitschlitzen ein Dummy Burst oder ein Burst mit einer nicht definierten Traningssequenz gesendet werden. Im 'Combined Mode' wird der Zeitschlitz #0 nur zur Hälfte für sogenannte Paging-Mitteilungen, welche die Mobilstation über einen eingehenden Anruf informieren, und für BCCH-Kanäle verwendet, während die andere Hälfte für Signalisierungskanäle verwendet wird. Die zuvor beschriebenen Fälle können jedoch zur Folge haben, daß der im Zeitschlitz #0 übertragene Trainingssequenzcode nicht der BCC-Information der Sende-Basisstation BS entspricht. Für eine optimale Nutzung der vorliegenden Erfindung sollten diese Fälle demnach ausgeschlossen sein.

Ebenso kann auch im Rahmen der vorliegenden Erfindung wie bei der Auswertung des Synchronisationsbursts SB die Rahmennummer leicht ermittelt werden, da sie kontinuierlich hochgezählt wird, d.h. eine wiederholte Bestätigung der Rahmennummer ist nicht unbedingt erforderlich.

In einer weiteren Ausführungsform kann die Mobilstation MS von der augenblicklich zuständigen Basisstation eine Information über die aktuell verwendete Rahmennummer und gegebenenfalls auch über die Zeitdifferenz der gesendeten Signale der Nachbar-Basisstationen erhalten. Ist die Ungenauigkeit dieser Information plus die durch die maximale Laufzeitdifferenz hervorgerufene Unsicherheit, welche vom Abstand der augenblicklich zuständigen Basisstation und der neuen Basisstation abhängt, kleiner als der Abstand zwischen zwei Normalbursts NB mit gleicher Trainingssequenz TS, läßt sich alleine durch die Beobachtung des Normalbursts NB das Timing der entsprechenden Nachbar-Basisstation bestimmen.

GSM-Mobilstationen lesen die zuvor beschriebenen Systeminformationen der Nachbar-Basisstationen BS auch im sogenannten 'Idle Mode', d.h. bei Nichtvorliegen eines Gesprächs. Da die Trainingssequenz TS des Normalbursts NB deutlich kürzer als diejenige des Synchronisationsbursts SB ist, hat dies zur Folge, daß die empfangende Mobilstation MS für den Empfang und die Auswertung der Trainingssequenz TS des Normalbursts NB deutlich kürzer eingeschaltet werden muß, wodurch Energie gespart werden kann. Des weiteren ist es vorteilhaft, wenn im 'Idle Mode' die Beobachtungsintervalle derart gewählt werden, daß sie günstig in Bezug auf den Zeitpunkt der Paging-Mitteilungen der augenblicklich zuständigen Basisstation liegen. Für den Empfang einer Paging-Mitteilung muß die Mobilstation ohnehin eingeschaltet werden und somit den Schlaf-Modus ('Sleep Mode') verlassen, so daß es sich empfiehlt, die Normalburst-Auswertung gleichzeitig mit diesem Einschalten durchzuführen, um einen zusätzlichen Energieverbrauch für einen zusätzlichen Einschaltvorgang zu vermeiden.

Hat eine GSM-Mobilstation MS einmal die Systeminformationen bezüglich des BCC der Sende-Basisstation BS gelesen und ermittelt, kennt die Mobilstation MS auch die Kanalkonfiguration des oder der CCCH-Kanäle der entsprechenden Nachbar-Funkzelle. Die Mobilstation MS kann dann unabhängig von der Konfiguration der entsprechenden Funkzelle alle von der Nachbar-Basisstation BS auf einem dieser CCCH-Kanäle gesendeten Normalbursts NB auswerten, d.h. nicht nur die auf jeden Fall immer gesendeten Normalbursts.

Ebenso ist denkbar, daß der Mobilstation die obige Information über die CCCH-Kanalkonfiguration der Nachbar-Basisstationen auch von der augenblicklich zuständigen Basisstation über eine zusätzliche Signalisierung mitgeteilt wird. Dies ist insbesondere dann vorteilhaft, wenn während einer Verbindung die notwendigen Systeminformationen der Nachbar-Basisstationen nicht decodiert und ermittelt werden können, da in diesem Fall hierfür nicht genügend Zeit zur Verfügung steht.

Besonders vorteilhaft ist auch, wenn das Mobilfunksystem derart ausgestaltet ist, daß die augenblicklich zuständige Basisstation der Mobilstation stets mitteilt, ob auch auf den anderen Zeitschlitzen, welche ursprünglich nicht für die Übertragung von Normalbursts NB vorgesehen sind, Normalbursts NB gesendet werden, so daß von der Mobilstation MS dann tatsächlich alle von den Nachbar-Basisstationen BS gesendeten Normalbursts NB ausgewertet werden können.

Die vorliegende Erfindung eignet sich insbesondere auch für UMTS-GSM-Dual Mode-Mobilstationen, wo Handover-Vorgänge zwischen GSM- und UMTS-Basisstationen erforderlich sein können. Gemäß dem UMTS-Standard ist der sogenannten 'Slotted Mode' oder 'Compressed Mode' vorgesehen, in dem Informationen bestimmte Rahmen in komprimierter Form übertragen werden, um somit einen Rahmenabschnitt von Informationen frei zu machen, der dann zur Einleitung von Handover-Vorgängen für Zwischenfrequenzmessungen verwendet werden kann. Bei Anwendung der vorliegenden Erfindung kann aufgrund der Zeiteinsparnis eine kürzere Zeitdauer des 'Slotted Mode' vorgesehen werden, was eine bessere Koordination der Messungen vieler Mobilstationen und eine geringere Beeinträchtigung einer bestehenden UMTS-Verbindung zur Folge hat. Zusätzlich stehen deutlich mehr Zeitpunkte für die Normalburst-Messung zur Verfügung, was ebenfalls die Koordination der Messungen erleichtert und bestehende Verbindungen weniger beeinträchtigt.

## Patentansprüche

1. Verfahren zum Ermitteln der mit einer Mobilstation zur Kommunikation geeigneten Basisstationen in einem Mobilfunksystem,
- wobei in dem Mobilfunksystem Informationen in Form von Bursts (SB, NB) mit fest vorgegebener Struktur übertragen werden,
- wobei die Informationen zwischen Basisstationen (BS) und der Mobilstation (MS) in eine Rahmen- und Zeitschlitzstruktur eingebettet übertragen werden und
- wobei von den Basisstationen (BS) während eines vordefinierten Zeitschlitzes für die jeweilige Basisstation (BS) charakteristische Trainingssequenzinformationen (TS) innerhalb eines Normalbursts (NB) übertragen werden,
**dadurch gekennzeichnet, dass**
die in dem von einer Basisstation (BS) zur Übertragung von Kommunikationsinformationen gesendeten Normalburst (NB) enthaltenen und von der Mobilstation (MS) empfangenen Informationen ausgewertet werden, um davon abhängig zu beurteilen, ob die entsprechende Basisstation (BS) für einen Verbindungsaufbau mit der Mobilstation (MS) geeignet ist oder nicht und
anhand der von der Mobilstation (MS) während des vordefinierten Zeitschlitzes empfangenen Trainingssequenzinformationen (TS) des Normalbursts (NB) die zugehörige sendende Basisstation (BS) identifiziert wird.

2. Verfahren nach Anspruch 1,
**dadurch gekennzeichnet,**
**daß** zur Beurteilung der Eignung einer Basisstation (BS) für einen Verbindungsaufbau mit der Mobilstation (MS) die in einem von der Basisstation (BS) gesendeten Normalburst (NB) enthaltenen Trainingssequenzinformationen (TS) ausgewertet werden.

3. Verfahren nach einem der Ansprüche 1 oder 2,
**dadurch gekennzeichnet,**
**daß** von jeder Basisstation (BS) während des ersten Zeitschlitzes eines entsprechenden Trägersignals die für die jeweilige Basisstation (BS) charakteristischen Trainingssequenzinformationen (TS) übertragen werden.

4. Verfahren nach einem der Ansprüche 1-3,
**dadurch gekennzeichnet,**
**daß** das Mobilfunksystem ein GSM-Mobilfunksystem ist.

5. Verfahren nach einem der Ansprüche 1-4,
**dadurch gekennzeichnet,**
**daß** nach der Identifikation der den empfangenen Normalburst (NB) sendenden Basisstation (BS) die CCCH (Common Control Channel)-Kanalkonfiguration der identifizierten Basisstation (BS) ermittelt wird, und
**daß** zur Beurteilung der Eignung der identifizierten Basisstation (BS) für einen Verbindungsaufbau mit der Mobilstation (MS) ein beliebiger von der identifizierten Basisstation (BS) auf einem CCCH-Kanal gesendeter Normalburst (NB) ausgewertet wird.

6. Verfahren nach einem der Ansprüche 1-5,
**dadurch gekennzeichnet,**
**daß** der Mobilstation (MS) von der augenblicklich mit der Mobilstation (MS) kommunizierenden Basisstation (BS) die CCCH (Common Control Channel)-Kanalkonfigurationen der benachbarten Basisstationen (BS) des Mobilfunksystems mitgeteilt werden, und
**daß** zur Beurteilung der Eignung einer Basisstation (BS) für einen Verbindungsaufbau mit der Mobilstation (MS) ein beliebiger von dieser Basisstation (BS) auf einem CCCH-Kanal gesendeter Normalburst (NB) ausgewertet wird.

7. Verfahren nach einem der Ansprüche 1-6,
**dadurch gekennzeichnet,**
**daß** der Mobilstation (MS) von der augenblicklich mit der Mobilstation (MS) kommunizierenden Basisstation (BS) mitgeteilt wird, in welchen Zeitschlitzen in dem Mobilfunksystem Normalbursts gesendet werden, und
**daß** zur Beurteilung der Eignung einer Basisstation (BS) für einen Verbindungsaufbau mit der Mobilstation (MS) die von dieser Basisstation (BS) in den mitgeteilten Zeitschlitzen gesendeten Normalbursts (NB) ausgewertet werden.

8. Verfahren nach einem der Ansprüche 1-7,
**dadurch gekennzeichnet,**
**daß** aus dem Zeitpunkt des Empfangs des Normalbursts (NB) durch die Mobilstation (MS) das zeitliche Sende- und Empfangsverhalten der Basisstation (BS) abgeleitet wird.

9. Verfahren nach einem der Ansprüche 1-8,
**dadurch gekennzeichnet,**
**daß** das Verfahren von der Mobilstation (MS) automatisch durchgeführt wird, wenn die Mobilstation (MS) zum Aufbau einer Kommunikationsverbindung eingeschaltet wird.

10. Mobilfunksystem,
- mit mindestens einer Mobilstation (MS) und
- mit mehreren Basisstationen (BS),
- wobei in dem Mobilfunksystem Informationen in Form von Bursts (SB, NB) mit fest vorgegebener Struktur übertragen werden,
- wobei die Informationen zwischen jeder Basisstation (BS) und der Mobilstation (MS) in eine Rahmen- und Zeitschlitzstruktur eingebettet übertragen werden und
- wobei von den Basisstation (BS) während eines vordefinierten Zeitschlitzes für die jeweilige Basisstation (BS) charakteristische Trainingssequenzinformationen (TS) innerhalb eines Normalbursts (NB) übertragen werden,
**dadurch gekennzeichnet, dass**
die Mobilstation (MS) derart ausgestaltet ist, daß sie zur Beurteilung der Eignung einer Basisstation (BS) für einen Verbindungsaufbau mit der Mobilstation (MS) die in einem von der Basisstation (BS) zur Übertragung von Kommunikationsinformationen gesendeten Normalburst (NB) enthaltenen Informationen auswertet und anhand der während des vordefinierten Zeitschlitzes empfangenen Trainingssequenzinformationen (TS) des Normalbursts (NB) die zugehörige sendende Basisstation (BS) identifiziert.

11. Mobilfunksystem nach Anspruch 10,
**dadurch gekennzeichnet,**
**daß** die Mobilstation (MS) und die Basisstationen (BS) zur Durchführung des Verfahrens nach einem der Ansprüche 1-9 ausgestaltet sind.

## Claims

1. A method for determining the base station which is suitable for communication with a mobile station in a mobile radio system,
- wherein information is transmitted in the mobile radio system in the form of bursts (SB, NB) having a fixed predefined structure,
- wherein the information is transmitted, embedded in a frame and time-slot structure, between base stations (BS) and the mobile station (MS) and
- wherein training sequence information (TS) which is characteristic of the relevant base station (BS) is transmitted by the base station (BS) within a normal burst (NB) during a predefined time slot,
**characterized in that**
the information which is contained in the normal burst (NB) that is sent by a base station (BS) for the purpose of transmitting communication information and which is received by the mobile station (MS) is analyzed in order to assess whether, on the basis of said information, the corresponding base station (BS) is or is not suitable for a connection setup with the mobile station (MS) and
the associated sending base station (BS) is identified on the basis of the training sequence information (TS) of the normal burst (NB) which is received by the mobile station (MS) during the predefined time slot.

2. The method as claimed in claim 1,
**characterized in that**
in order to assess the suitability of a base station (BS) for a connection setup with the mobile station (MS), the training sequence information (TS) which is contained in a normal burst (NB) that is sent by the base station (BS) is analyzed.

3. The method as claimed in claim 1 or 2,
**characterized in that**
the training sequence information (TS) which is characteristic of the relevant base station (BS) is transmitted by each base station (BS) during the first time slot of a corresponding carrier signal.

4. The method as claimed in one of the claims 1 to 3,
**characterized in that**
the mobile radio system is a GSM mobile radio system.

5. The method as claimed in one of the claims 1 to 4,
**characterized in that**
following the identification of the base station (BS) which sent the received normal burst (NB), the CCCH (common control channel) channel configuration of the identified base station (BS) is determined, and that
in order to assess the suitability of the identified base station (BS) for a connection setup with the mobile station (MS), any normal burst (NB) that is sent by the identified base station (BS) on a CCCH channel is analyzed.

6. The method as claimed in one of the claims 1 to 5,
**characterized in that**
the mobile station (MS) is informed, by the base station (BS) which is currently communicating with the mobile station (MS), of the CCCH (common control channel) channel configuration of the neighboring base stations (BS) of the mobile radio system, and that
in order to assess the suitability of a base station (BS) for a connection setup with the mobile station (MS), any normal burst (NB) that is sent by this base station (BS) on a CCCH channel is analyzed.

7. The method as claimed in one of the claims 1 to 6,
**characterized in that**
the mobile station (MS) is informed, by the base station (BS) which is currently communicating with the mobile station (MS), of the time slots in which normal bursts are sent in the mobile radio system, and that
in order to assess the suitability of a base station (BS) for a connection setup with the mobile station (MS), the normal bursts (NB) that are sent by this base station (BS) in the specified time slots are analyzed.

8. The method as claimed in one of the claims 1 to 7,
**characterized in that**
the time-relative send and receive behavior of the base station (BS) is derived from the time-point of the receipt of the normal burst (NB) by the mobile station (MS).

9. The method as claimed in one of the claims 1 to 8,
**characterized in that**
the method is automatically carried out by the mobile station (MS) if the mobile station (MS) is activated for the setup of a communication connection.

10. A mobile radio system
- having at least one mobile station (MS) and
- having a plurality of base stations (BS),
- wherein information is transmitted in the mobile radio system in the form of bursts (SB, NB) having a fixed predefined structure,
- wherein the information is transmitted, embedded in a frame and time-slot structure, between each base station (BS) and the mobile station (MS) and
- wherein training sequence information (TS) which is characteristic of the relevant base station (BS) is transmitted by the base station (BS) within a normal burst (NB) during a predefined time slot,
**characterized in that**
the mobile station (MS) is configured such that, in order to assess the suitability of a base station (BS) for a connection setup with the mobile station (MS), it analyzes the information which is contained in a normal burst (NB) that is sent by the base station (BS) for the purpose of transmitting communication information and identifies the associated sending base station (BS) on the basis of the training sequence information (TS) of the normal burst (NB), said training sequence (TS) being received during the predefined time slot.

11. The mobile radio system as claimed in claim 10,
**characterized in that**
the mobile station (MS) and the base stations (BS) are configured for carrying out the method as claimed in one of the claims 1 to 9.

## Revendications

1. Procéder pour déterminer les stations de base aptes à communiquer avec une station mobile dans un système radiotéléphonique mobile,
- dans lequel des informations sous forme de salves (SB, NB) à structure prédéterminée de manière fixe sont transmises dans le système radiotéléphonique mobile,
- dans lequel les informations sont transmises entre les stations de base (BS) et la station mobile (MS) en étant insérées dans une structure de trames et de créneaux temporels et
- dans lequel des informations de séquences d'entraînement (TS) caractéristiques sont transmises dans une salve normale (NB) par les stations de base (BS) pendant un créneau temporel prédéfini pour la station de base respective (BS),
**caractérisé en ce que**
les informations contenues dans la salve normale (NB) émise par une station de base (BS) pour la transmission d'informations de communication et reçues par la station mobile (MS) sont évaluées afin de juger, en fonction de cette évaluation, si la station de base correspondante (BS) est apte à établir une connexion avec la station mobile (MS) ou non et
**en ce que** la station de base (BS) émettrice correspondante est identifiée à l'aide des informations de séquences d'entraînement (TS) de la salve normale (NB) par la station mobile (MS), reçues pendant le créneau temporel prédéfini.

2. Procédé selon la revendication 1,
**caractérisé en ce**
**que** les informations de séquences d'entraînement (TS) contenues dans une salve normale (NB) émise par la station de base (BS) sont évaluées pour juger de l'aptitude d'une station de base (BS) à établir une connexion avec la station mobile (MS).

3. Procédé selon l'une quelconque des revendications 1 ou 2,
**caractérisé en ce**
**que** les informations de séquences d'entraînement caractéristiques (TS) à la station de base respective (BS) sont transmises par chaque station de base (BS) pendant le premier créneau temporel d'un signal porteur correspondant.

4. Procédé selon l'une quelconque des revendications 1 à 3,
**caractérisé en ce**
**que** le système radiotéléphonique mobile est un système radiotéléphonique mobile GSM.

5. Procédé selon l'une quelconque des revendications 1 à 4,
**caractérisé en ce**
**que** la configuration de canal CCCH (Common Control Channel) de la station de base identifiée (BS) est déterminée après l'identification de la station de base (BS) émettant la salve normale reçue (NB), et
**que** pour juger de l'aptitude de la station de base identifiée (BS) à établir une connexion avec la station mobile (MS), une salve normale (NB) quelconque émise par la station de base identifiée (BS) sur un canal CCCH est évaluée.

6. Procédé selon l'une quelconque des revendications 1 à 5,
**caractérisé en ce**
**que** les configurations de canal CCCH (Common Control Channel) des stations de base voisines (BS) du système radiotéléphonique mobile sont communiquées à la station mobile (MS) par la station de base (BS) communiquant momentanément avec la station mobile (MS), et
**que** pour juger de l'aptitude d'une station de base (BS) à établir une connexion avec la station mobile (MS), une salve normale (NB) quelconque émise par cette station de base (BS) sur un canal CCCH est évaluée.

7. Procédé selon l'une quelconque des revendications 1 à 6,
**caractérisé en ce**
**qu'**il est communiqué à la station mobile (MS), par la station de base (BS) communiquant momentanément avec la station mobile (MS), dans quels créneaux temporels dans le système radiotéléphonique mobile des salves normales sont émises, et
**que** pour juger de l'aptitude d'une station de base (BS) à établir une connexion avec la station mobile (MS), les salves normales (NB) émises par cette station de base (BS) dans les créneaux temporels communiqués sont évaluées.

8. Procédé selon l'une quelconque des revendications 1 à 7,
**caractérisé en ce**
**que** le comportement temporel d'émission et de réception de la station de base (BS) est déduit à partir du moment de réception de la salve normale (NB) par la station mobile (MS).

9. Procédé selon l'une quelconque des revendications 1 à 8,
**caractérisé en ce**
**que** le procédé est exécuté automatiquement par la station mobile (MS) lorsque la station mobile (MS) est connectée pour établir une liaison de communication.

10. Système radiotéléphonique mobile
- comprenant au moins une station mobile (MS) et
- comprenant plusieurs stations de base (BS),
- dans lequel des informations sous forme de salves (SB, NB) à structure prédéterminée de manière fixe sont transmises dans le système radiotéléphonique mobile,
- dans lequel les informations sont transmises entre chaque station de base (BS) et la station mobile (MS) en étant insérées dans une structure de trames et de créneaux temporels et
- dans lequel des informations de séquences d'entraînement (TS) caractéristiques à la station de base respective (BS) sont transmises dans une salve normale (NB) par les stations de base (BS) pendant un créneau temporel prédéfini,
**caractérisé en ce que**
la station mobile (MS) est conçue de telle manière que, pour juger de l'aptitude d'une station de base (BS) à établir une connexion avec la station mobile (MS), elle évalue les informations contenues dans une salve normale (NB) émise par la station de base (BS) pour la transmission d'informations de communication et qu'elle identifie la station de base (BS) émettrice correspondante à l'aide des informations de séquences d'entraînement (TS) de la salve normale (NB), reçues pendant le créneau temporel prédéfini.

11. Système radiotéléphonique mobile selon la revendication 10,
**caractérisé en ce**
**que** la station mobile (MS) et les stations de base (BS) sont conçues pour la réalisation du procédé selon l'une quelconque des revendications 1 à 9.
